# EUROPEAN PATENT SPECIFICATION

(11) **EP 2 091 392 B1**
(45) Date of publication and mention of the grant of the patent: **13.06.2012**
(21) Application number: 07819457.8
(22) Date of filing: 30.10.2007
(51) Int. Cl.: A47J 31/06

(54) **INSERT FOR FILTER HOLDERS OF COFFEE MACHINES, PARTICULARLY FOR ESPRESSO COFFEE MACHINES**
EINSATZ FÜR FILTERHALTER FÜR KAFFEEMASCHINEN, BESONDERS FÜR ESPRESSO-KAFFEEMASCHINEN
INSERT POUR PORTES-FILTRE DE MACHINES À CAFÉ, EN PARTICULIER POUR MACHINES À CAFÉ POUR EXPRESSO

(30) Priority: 16.11.2006 IT MI20062209
(43) Date of publication of application: 26.08.2009
(73) Proprietor: ILLYCAFFE' S.p.A., I-34147 Trieste (IT)
(72) Inventor: SUGGI LIVERANI, Furio, 34123 Trieste (IT); MASTROPASQUA, Luca, 34123 Trieste (IT); DELLAPIETRA, Bruno, 34013 Duino Aurisina (IT); BOLZICCO, Claudio, 33170 Pordenone (IT); VAN EEDEN, Frans, 34135 Trieste (IT)
(74) Representative: Modiano, Micaela Nadia
(86) International application number: PCT/EP2007/009422
(87) International publication number: WO 2008/058633

(56) References cited:
- EP-A- 1 580 144
- EP-A- 1 767 467
- WO-A-2005/099534
- DE-A1- 3 504 441

## Description

### Technical Field

The present invention relates to an insert for filter holders of coffee machines, particularly espresso coffee machines.

### Background Art

It is known that machines for preparing espresso coffee, used typically in bars and restaurants, require a dose of roasted and ground coffee to be placed in a filtering vessel which is integrated in a so-called "filter holder". The filter holder is an element which can be coupled to the espresso coffee machine and is provided with a bowl from which a handle protrudes radially in order to facilitate fitting and removal of the filter holder with respect to the machine.

In known filter holders, the bowl is completely open in the upper part so that it can be filled manually with a dose of ground coffee (typically approximately 7 grams for each cup of beverage to be dispensed) and so as to define an infusion chamber when the filter holder is fitted on the machine.

The bowl has, on the bottom, a discharge opening, which has a much smaller diameter than the upper opening, in order to allow the passage of the extracted beverage and its conveyance into an external cup.

A perforated disk is also fixed at the bottom of the bowl and is thus arranged between the dose of ground coffee and the beverage discharge opening. The filter is used to keep the solid residues inside the bowl and prevent them from being conveyed into the external cup.

The known type of filter holder described above, though being widespread and used in professional machines, has its maintenance and cleaning as its main drawback. Once the beverage has been extracted, the traditional filter holder is in fact emptied by removing it from the machine and tipping it over a waste container, possibly striking it repeatedly, to cause the block of moist coffee left in the bowl of the filter holder to fall.

This procedure for emptying the filter holder of the solid coffee residues is rather inaccurate, since it does not allow to remove completely any trace of solid. For this reason, after a certain number of extractions of the beverage, the filter holder needs to be cleaned, and for this purpose it may be necessary to remove the perforated support which is fixed to the bottom of the bowl.

DE 35 04 441 A1 discloses a ground coffee filter insert and a receiving device therefore. The filter insert is disposable and comprises two layers of filter paper enclosing the ground coffee mutually connected at their circumferential edges to form a sealing and stabilising ring. The receiving device is reusable and consists of a strainer-type bottom for supporting the lower layer of filter paper of the filter insert, and is provided with a projecting edge on which the stabilising ring of the filter insert rests in a positive-locking manner when the filter insert has been inserted.

EP-A-1 580 144 discloses a disposable integrated cartridge containing a dose of ground coffee and fittable into a cartridge holder of a bayonet holder.

### Disclosure of the Invention

The aim of the present invention is to obviate the drawbacks cited above by providing an insert for filter holders which reduces considerably the cleaning times and ensures the same performance and results achieved by using traditional filter holders and systems for extracting espresso coffee.

Within this aim, an object of the invention is to provide an insert which can be used universally in existing filter holders and machines.

Another object of the invention is to provide a filter holder which can be emptied in the conventional manner without however leaving coffee residues inside it.

Another object of the invention is to allow to obtain a beverage which is always creamy at each extraction, without altering the existing structure of the espresso coffee machine in which the filter holder is to be installed.

Still another object of the invention is to provide an insert for filter holders which is highly reliable, relatively easy to provide and at competitive costs.

In accordance with the invention, there is provided an insert for filter holders as defined in the appended claims.

### Brief Description of the Drawings

Further characteristics and advantages of the invention will become better apparent from the description of a preferred but not exclusive embodiment of the insert according to the invention, illustrated by way of non-limiting example in the accompanying drawings, wherein:
Figure 1 is an axial sectional view of a filter holder which incorporates the insert according to a first embodiment of the invention;
Figure 2 is a sectional exploded view of the filter holder of Figure 1;
Figure 3 is an axial sectional view of a filter holder which incorporates the insert according to a second embodiment of the invention;
Figure 4 is a sectional exploded view of an insert according to a third embodiment of the invention.

### Ways of carrying out the Invention

With reference to the figures, the insert according to the invention, designated by the reference numerals 1a, 1b, 1c in its different embodiments, comprises a tray 2a, 2b, 2c and an adapter 20a, 20b on which the tray 2a, 2b, 2c is rested. The tray 2a, 2b, 2c is provided with a large upper opening and is adapted to contain a dose 3 of ground coffee or a prepackaged pod 3c of ground coffee.

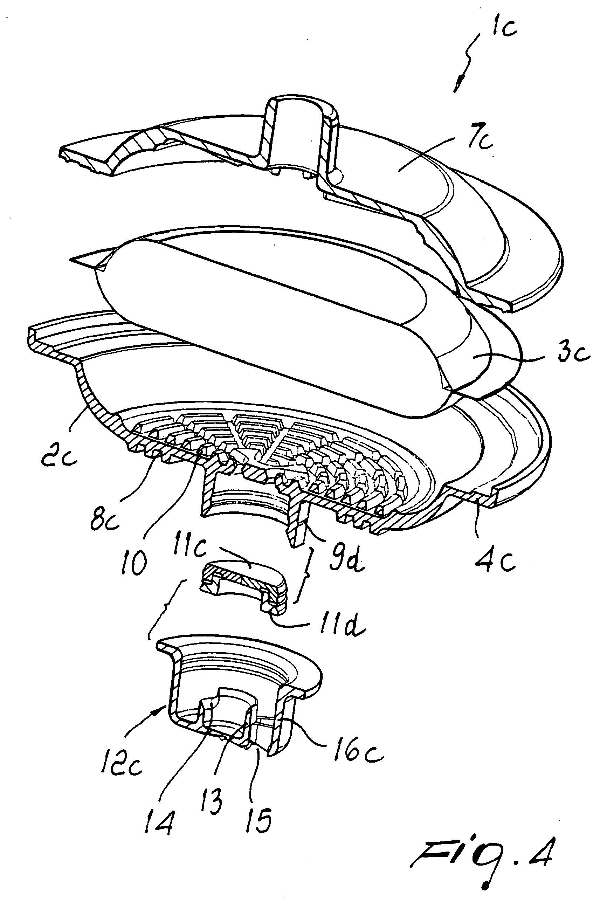

The diameter of the upper opening of the tray is substantially equal to the diameter of the bowl of a traditional filter holder or in any case is sufficiently large to receive from above a prepackaged pod of ground coffee (such as the pod 3c of the E.S.E.® type shown in Figure 4) or a dose of loose ground coffee introduced manually by a user for example by means of a traditional grinder-dispenser.

The tray 2a, 2b, 2c is disposable and is made of a low-cost material, for example plastics, a multilayer composite of plastics, cardboard or aluminum or, more preferably, polypropylene, so that it can be discarded once extraction has ended.

The adapter 20a, 20b instead can be made of any material (although plastics is preferred) and is adapted to be fixed to the bottom of the bowl portion of any filter holder 6 simply by removing the perforated support that is traditionally fitted to such bottom and replacing it with the adapter 20a, 20b. Although this is not shown, the tray 2c also is accompanied by an adapter which is similar to the adapter 20a, 20b.

In practice, the insert according to the invention is composed of two portions: a fixed one, which remains permanently inside the bowl of the filter holder, and a disposable one, which rests on the fixed portion.

The tray 2a, 2b, 2c comprises a base 8a, 8b, 8c provided with a discharge port 9a, 9b, 9c in a substantially central position, which is adapted to make the beverage obtained from the dose of coffee 3, 3c pass toward the outside of the tray. The port 9a, 9b, 9c is aligned with a through opening 21a, 21b of the adapter 20a, 20b, to allow to convey the beverage toward the delivery spout of the filter holder.

Preferably, the base 8a, 8b, 8c has a plurality of ribs 10, which are arranged so as to define a densely packed plurality of channels which intersect one another in order to convey the beverage toward the discharge port 9a, 9b, 9c.

The tray 2a, 2b, 2c is further provided with a protrusion on the side wall which protrudes radially toward the outside of the tray 2a, 2b, 2c and is adapted to rest against the rim 5 of the bowl-shaped portion of a filter holder 6.

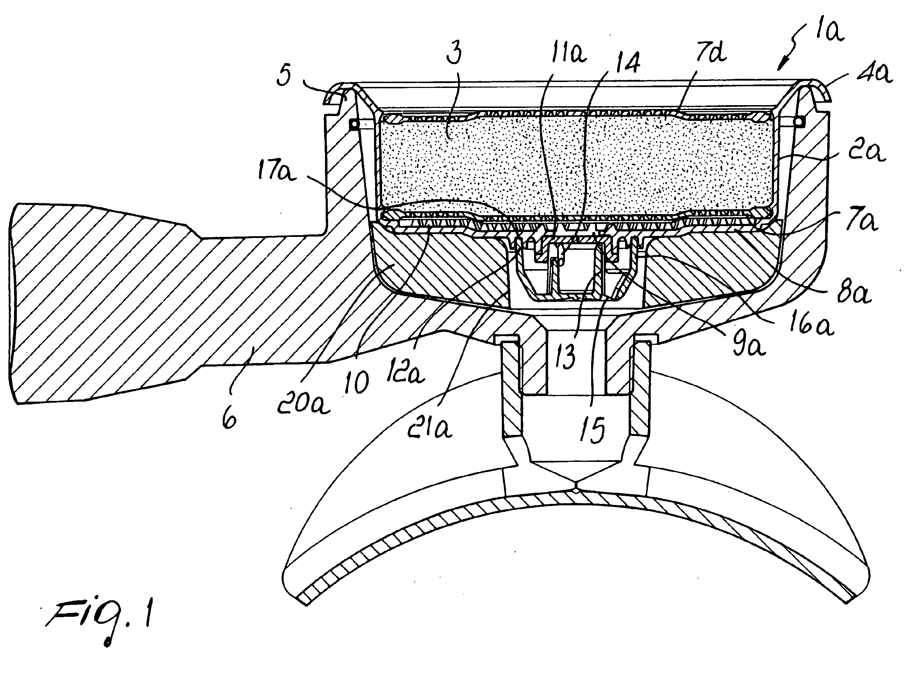

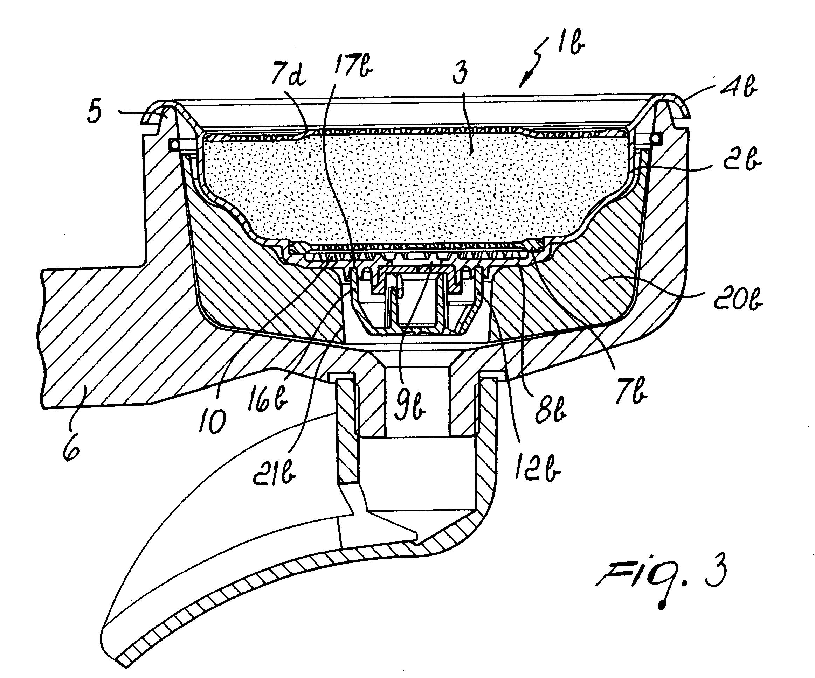

The protrusion of the side wall of the tray 2a, 2b can consist of a rim 4a, 4b of the upper opening of the tray 2a, 2b, which is conveniently hook-shaped so as to be able to engage or rest on the corresponding rim 5 of the filter holder 6, as shown in Figures 1 and 3.

Alternatively, the protrusion of the lateral surface of the tray 2c can be simply a flange 4c provided on the rim of the upper opening of the tray 2c and also adapted to rest on the rim 5 of the filter holder 6.

The provision of a rim which protrudes from the outer lateral surface of the tray 2a, 2b, 2c allows to have an element for supporting the tray 2a, 2b, 2c inside the bowl-shaped portion of the filter holder. This support is combined with the support provided by the adapter.

The protruding rim 4a, 4b, 4c of the tray also provides a surface for continuous protection along the entire perimeter of the bowl-shaped portion of the filter holder, thus preventing access to the internal surfaces of the bowl-shaped portion by the percolation substances which fill the extraction chamber during beverage preparation.

Moreover, the protruding rim 4a, 4b, 4c provides a surface which can be made of a different material with respect to the bowl-shaped portion of the filter holder and is adapted to engage, instead of the rim 5, the surfaces of the water injection assembly provided in traditional machines, which is not shown in the figures.

The tray 2a, 2b, 2c further comprises a filtering element preferably provided by means of a perforated disk 7a, 7b which rests on the bottom 8a, 8b of the tray 2a, 2b, in particular on the ribs 10.

The perforated disk 7a, 7b, also preferably made of plastics, is not necessary if the dose of coffee to be introduced in the tray is a prepackaged pod provided with its own filtering element, for example the E.S.E.® pod 3c shown in Figure 4.

Moreover, the perforated disk 7a, 7b can optionally comprise, on the surface in contact with the dose of coffee, a sheet of filter paper or filtering fabric in order to increase filtration.

Optionally, an additional perforated disk 7d can be used to cover the upper surface of the dose of coffee 3, so as to ensure a more uniform distribution of the hot water on the dose of coffee 3. As an alternative, it is possible to use an upper lid 7c, shown in Figure 4, to be rested on the protruding rim 4c of the tray 2c and adapted to define an interspace between the lid and the upper surface of the dose of coffee or of the pod 3c.

A crema generation device is fitted on the base 8a, 8b, 8c of the tray, at the discharge port 9a, 9b, 9c, protrudes from the base and comprises an elastic septum 11a, 11b, 11c and a corresponding safety lid 12a, 12b, 12c.

The elastic septum 11a, 11b, 11c is arranged on the rim of the discharge port 9a, 9b, 9c so as to close it and comprises a membrane which is made preferably of thermoplastic elastomer (TPE), for example SEBS (a styrene-ethylene-butylene-styrene block copolymer) or Laprene® (based on SEBS and polyolefins), in which there is a through orifice which is adapted to allow the flow of the beverage when the pressure inside the extraction chamber defined in the tray 2a, 2b, 2c exceeds a certain value, causing a deformation and therefore a widening of the orifice.

As an alternative to the through orifice, the membrane of the elastic septum 11a, 11b, 11c can comprise a dead orifice, which can be opened by breakage when the pressure inside the extraction chamber reaches a certain threshold.

The thermoplastic material that composes the elastic septum 11a, 11b, 11c is particularly advantageous, because it allows the elastic septum to be co-molded together with the tray 2a, 2b, 2c, so as to eliminate intermediate mechanical operations for fixing the partition to the rim of the discharge port of the tray 2a, 2b, 2c and reduce drastically the manufacturing costs of the tray.

The elastic septum 11c, shown in Figure 4, can be co-molded together with a rigid annular support 11d, which can be locked by snap action in an appropriately provided annular recess provided on the rim of the discharge port 9c. For this purpose, such rim protrudes axially by means of a cylindrical wall 9d which protrudes from the bottom of the tray 2c.

The safety lid 12a, 12b, 12c is fixed to the outer surface of the base 8a, 8b, 8c of the tray and is provided with an internal shoulder 13, which is engaged on the elastic septum 11a, 11b, 11c and is adapted to retain the septum against the discharge port 9a, 9b, 9c provided in the base 8a, 8b, 8c in order to prevent the septum from being expelled accidentally from the tray 2a, 2b, 2c due to the high pressures reached during beverage extraction.

In the third embodiment of the insert according to the invention, shown in Figure 4, the shoulder 13 engages the rigid annular support 11d of the septum for similar safety reasons.

The shoulder 13 has at least one passage 14 in order to allow the beverage to exit from the tray 2a, 2b, 2c by passing through the safety lid 12a, 12b, 12c. For this purpose, the lid 12a, 12b, 12c comprises at least one discharge opening 15, which is preferably arranged laterally with respect to the central axis of the discharge port 9a, 9b, 9c, i.e., with respect to the axis of symmetry of the tray 2a, 2b, 2c.

The passage 14 on the shoulder 13 and the discharge opening 15 of the lid 12a, 12b, 12c are advantageously arranged on opposite sides with respect to the central axis of the discharge port 9a, 9b, 9c, thus defining a convoluted path for the extracted beverage which reduces its speed.

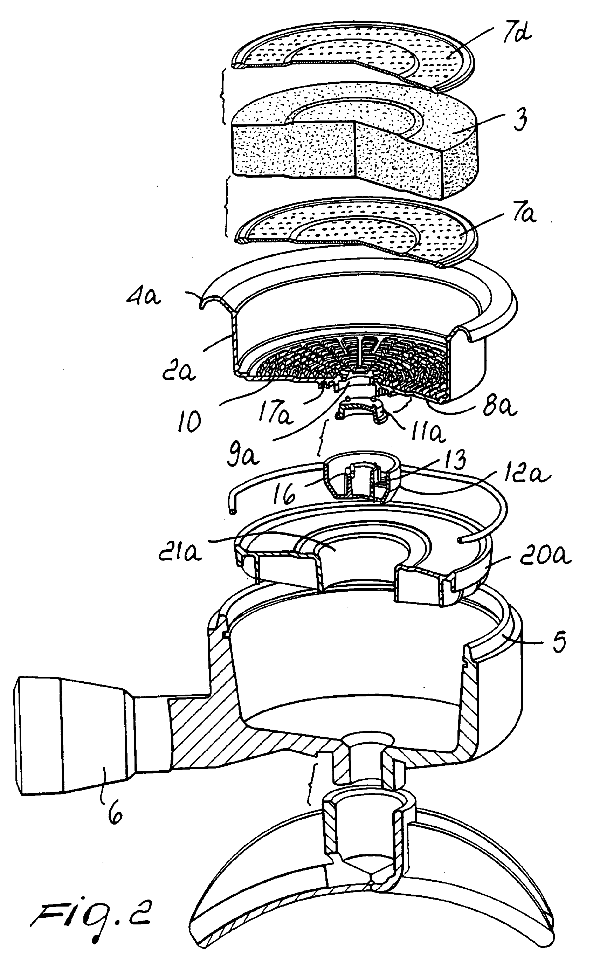

In the embodiments of Figures 1-3, the lid 12a, 12b is provided with a second closed cylindrical wall 16a, 16b, which surrounds the shoulder 13 and can be interlocked in an appropriately provided circular seat 17a, 17b which is formed in the base 8a, 8b around the discharge port 9a, 9b. The walls 13 and 16a, 16b thus define a cylindrical ring, in which the beverage which exits from the orifice of the elastic partition 11a, 11b flows before reaching the discharge opening 15 provided in the safety lid 12a, 12b.

In the insert of Figure 4, instead, the lid 12c is provided with a second cylindrical wall 16c, provided internally with at least one annular rib which engages by snap action a similar annular rib which is present on the outer surface of the cylindrical wall 9d. In this case also, the walls 13 and 16c define a cylindrical ring, in which the beverage which exits from the orifice of the elastic partition 11c flows before reaching the discharge opening 15.

Clearly, any solution suitable to lock the safety lid 12a, 12b, 12c to the bottom of the tray 2a, 2b, 2c can be used without thereby departing from the invention such as defined by the claims. Moreover, as is evident to the person skilled in the art, an arrangement of the partition-safety lid assembly such as the one of Figure 4 can be adopted in the embodiments of the tray shown in Figures 1-3, and vice versa.

Operation of the invention is as follows.

With reference for example to Figure 1, a user is considered who has a traditional machine for making espresso coffee which is provided with a filter holder. The user, after removing the filter and any existing crema generator, which are fixed by means of a screw to the bottom of the bowl of the filter holder, inserts the adapter 20a in the bowl of the filter holder and locks it by using the same means that fixed the pre-existing filter.

At this point, the filter holder is ready to operate. The user, who has a plurality of disposable trays 2a, takes one and rests it on the adapter and on the rim 5 of the bowl of the filter holder 6.

The user then inserts in the tray 2a one or more doses of ground coffee by means of a grinder-dispenser or by means of a spoon, and optionally covers the dose 3 introduced in the tray 2a by means of the disposable perforated disk 7d.

The filter holder 6 is then engaged with the extraction assembly of the machine and the protruding rim 4a of the tray abuts against the lower surface of the extraction assembly or against a gasket which is provided on the lower surface of the extraction assembly.

The machine is then activated and the coffee that is extracted, by means of the particular cream generation device that is integrated in the disposable tray 2a, exits from the spout of the filter holder 6 in a very creamy form.

Once extraction has ended, the user disengages the filter holder 6 from the extraction assembly and overturns it over a waste bin. The tray 2a, which was only resting on the bowl of the filter holder 6, falls by gravity together with all the solid coffee residues, leaving the interior of the bowl of the filter holder clean.

In practice it has been found that the insert according to the invention fully achieves the intended aim, since it allows to avoid the laborious operations for cleaning and removing solid residues from filter holders of coffee machines. Moreover, by means of the adapter 20a, 20b, the insert can be used in the filter holders of traditional machines simply by using it to replace the perforated disks that are traditionally fitted detachably to the bottom of the bowl-shaped portion.

Another considerable advantage of the invention is that creamy coffee is obtained at each extraction since, thanks to the disposable tray, the filter holder always has a new crema generator, which as such is not worn.

Although the device according to the invention has been conceived in particular for espresso coffee machines, it can in any case be used more generally for machines for preparing beverages in general which use devices of the filter holder type, in which an edible powdered substance is introduced and is adapted to generate a beverage by percolation.

The device thus conceived is susceptible of numerous modifications and variations, all of which are within the scope of the appended claims. All the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An inset (1a, 1b, 1c) arranged in a filter holder (6) of coffee machines, particularly espresso coffee machines, said insert comprising a tray (2a, 2b, 2c) for containing a dose (3) of loose ground coffee or a prepackaged pod (3c) of ground coffee, said dose or pod to be introduced from above by a user, said tray comprising a base (8a, 8b, 8c) which has a discharge port (9a, 9b, 9c) and a side wall which, together with the base, defines the tray, said tray further comprising a protrusion (4a, 4b, 4c) on the side wall which protrudes substantially radially toward the outside of the tray, said filter holder comprising a bowl-shaped portion and a handle which protrudes from the bowl-shaped portion, said tray being disposable and the insert further comprising an adapter (20a, 20b) which is provided with means for fixing to a bottom of the bowl portion of the filter holder such that the adapter is fixed to said bottom of said bowl portion of the filter holder, said tray resting upon said adapter, **characterised in** said protrusion resting against the rim (5) of the bowl portion of the filter holder.

2. The insert arranged in the filter holder according to claim 1, wherein the protrusion of the side wall of the tray is an upper rim (4a, 4b) of the tray.

3. The insert arranged in the filter holder according to claim 2, wherein the upper rim (4a, 4b) of the tray is contoured so as to have a hook-shaped profile.

4. The insert arranged in the filter holder according to claim 2, wherein the protrusion of the side wall of the tray is a flange (4c) provided on the upper rim of the tray.

5. The insert arranged in the filter holder according to one or more of the preceding claims, comprising a crema generator device which is fitted to the base of the tray at the discharge port (9a, 9b, 9c).

6. The insert arranged in the filter holder according to claim 5, wherein said crema generator device protrudes from the base of the tray and comprises an elastic septum (11a, 11b, 11c) and a corresponding safety lid (12a, 12b, 12c).

7. The insert arranged in the filter holder according to claim 6, wherein the elastic septum (11a, 11b, 11c) is arranged on a rim of the discharge port (9a, 9b, 9c) so as to close it and comprises a membrane in which there is a through or dead hole which is deformable or, if dead, capable of breaking under pressure.

8. The insert arranged in the filter holder according to claim 7, wherein the membrane is made of thermoplastic elastomer, preferably SEBS.

9. The insert arranged in the filter bolder according to one or more of claims 6 to 8, wherein the elastic septum (11c) is co-molded on a rigid annular support (11d).

10. The insert arranged in the filter holder according to one or more of claims 6 to 9, wherein the safety lid (12a, 12b, 12c) is fixed to the outer surface of the base (8a, 8b, 8c) of the tray and comprises an inner shoulder (13) which is engaged on the elastic septum (11a, 11b, 11c) in order to retain the septum against the discharge port (9a, 9b, 9c) provided in the base.

11. The insert arranged in the filter holder according to claims 9 and 10, wherein the shoulder (13) engages the rigid annular support (11d) the elastic septum,

12. The insert arranged in the filter holder according to claim 10 or 11, wherein the shoulder (13) has at least one passage (14) and the safety lid (12a, 12b, 12c) comprises at least one discharge opening (15) which is arranged laterally with respect to the central axis of the discharge port (9a, 9b, 9c).

13. The insert arranged in the filter holder according to claim 12, wherein the passage (14) provided on the shoulder (13) and the discharge opening (15) of the safety lid (12a, 12b, 12c) are arranged on opposite sides with respect to the central axis of the discharge port (9a, 9b, 9c).

14. The insert arranged in the filter holder according to one or more of claims 10 to 13, wherein the safety lid (12a, 12b, 12c) comprises a second cylindrical wall (16a, 16b, 16c) which is closed and surrounds the shoulder (13) so as to define a cylindrical ring.

15. The insert arranged in the filter holder according to one or more of the preceding claims, wherein the base (8a, 8b, 8c) of the tray has a plurality of ribs (10) which are arranged so as to define a densely packed set of mutually intersecting channels.

16. The insert arranged in the filter holder according to one or more of the preceding claims, wherein the tray is shaped complementarity with respect to a prepackaged pod (3c) of the E.S.E.® type.

## Patentansprüche

1. Einsatz (1a, 1b, 1c) in einem Filterhalter (6) von Kaffeemaschinen, insbesondere Espressokaffeemaschinen, eingerichtet, wobei der Einsatz eine Schale (2a, 2b, 2c) zum Aufnehmen einer Dosis (3) von losem gemahlenen Kaffee oder einer vorverpackten Portionskapsel (3c) von gemahlenem Kaffee aufweist, wobei die Dosis oder Portionskapsel von einem Benutzer von oben her einzuführen ist, wobei die Schale eine Basis (8a, 8b, 8c) aufweist, die eine Ausgussöffnung (9a, 9b, 9c) und eine Seitenwand hat, die gemeinsam mit der Basis die Schale definiert, wobei die Schale ferner einen Vorsprung (4a, 4b, 4c) auf der Seitenwand aufweist, der im Wesentlichen radial zu der Außenseite der Schale vorragt, wobei der Filterhalter einen napfförmigen Abschnitt aufweist und einen Griff, der von dem napfförmigen Abschnitt vorsteht, wobei die Schale ein Einwegartikel ist und der Einsatz ferner einen Adapter (20a, 20b) aufweist, der mit Mitteln zum Befestigen an einem Boden des Napfabschnitts des Filterhalters versehen ist, so dass der Adapter an dem Boden des Napfabschnitts des Filterhalters befestigt ist, wobei die Schale auf dem Adapter ruht, **dadurch gekennzeichnet, dass** der Vorsprung gegen den Rand (5) des Napfabschnitts des Filterhalters ruht.

2. Einsatz, eingerichtet in dem Filterhalter, nach Anspruch 1, wobei der Vorsprung der Seitenwand der Schale ein oberer Rand (4a, 4b) der Schale ist.

3. Einsatz, eingerichtet in dem Filterhalter, nach Anspruch 2, wobei der obere Rand (4a, 4b) der Schale eine Kontur derart hat, dass er ein hakenförmiges Profil hat.

4. Einsatz, eingerichtet in dem Filterhalter, nach Anspruch 2, wobei der Vorsprung der Seitenwand der Schale ein Flansch (4c) ist, der auf dem oberen Rand der Schale bereitgestellt ist.

5. Einsatz, eingerichtet in dem Filterhalter, nach einem oder mehreren der vorhergehenden Ansprüche, der eine Crema-Erzeugungsvorrichtung aufweist, die an der Basis der Schale an der Ausgussöffnung (9a, 9b, 9c) befestigt ist.

6. Einsatz, eingerichtet in dem Filterhalter, nach Anspruch 5, wobei die Crema-Erzeugungsvorrichtung von der Basis der Schale vorsteht und eine elastische Trennwand (11a, 11b, 11c) und einen entsprechenden Sicherheitsdeckel (12a, 12b, 12c) aufweist.

7. Einsatz, eingerichtet in dem Filterhalter, nach Anspruch 6, wobei die elastische Trennwand (11a, 11b, 11c) auf einem Rand der Ausgussöffnung (9a, 9b, 9c) eingerichtet ist, um sie zu verschließen, und eine Membran aufweist, in der eine durchgehende oder Blindöffnung besteht, die verformbar ist oder, wenn es sich um eine Blindöffnung handelt, unter Druckanwendung brechen kann.

8. Einsatz, eingerichtet in dem Filterhalter, nach Anspruch 7, wobei die Membran aus einem thermoplastischen Elastomer, vorzugsweise aus SEBS hergestellt ist.

9. Einsatz, eingerichtet in dem Filterhalter, nach einem oder mehreren der Ansprüche 6 bis 8, wobei die elastische Trennwand (11c) gemeinsam auf einem starren ringförmigen Träger (11d) geformt ist.

10. Einsatz, eingerichtet in dem Filterhalter, nach einem oder mehreren der Ansprüche 6 bis 9, wobei der Sicherheitsdeckel (12a, 12b, 12c) an der Außenfläche der Basis (8a, 8b, 8c) der Schale befestigt ist und eine innere Schulter (13) aufweist, die auf der elastischen Trennwand (11a, 11b, 11c) eingreift, um die Trennwand gegen die Auslassöffnung (9a, 9b, 9c), die in der Basis bereitgestellt ist, zurückzuhalten.

11. Einsatz, eingerichtet in dem Filterhalter, nach den Ansprüchen 9 und 10, wobei die Schulter (13) in den starren ringförmigen Träger (11d) der elastischen Trennwand eingreift.

12. Einsatz, eingerichtet in dem Filterhalter, nach Anspruch 10 oder 11, wobei die Schulter (13) mindestens einen Durchgang (14) hat, und der Sicherheitsdeckel (12a, 12b, 12c) mindestens eine Ausgussöffnung (15) aufweist, die seitlich in Bezug zu der zentralen Achse der Ausgussöffnung (9a, 9b, 9c) eingerichtet ist.

13. Einsatz, eingerichtet in dem Filterhalter, nach Anspruch 12, wobei der Durchgang (14), der auf der Schulter (13) bereitgestellt ist, und die Ausgussöffnung (15) des Sicherheitsdeckels (12a, 12b, 12c) auf entgegen gesetzten Seiten in Bezug zu der zentralen Achse der Ausgussöffnung (9a, 9b, 9c) eingerichtet sind.

14. Einsatz, eingerichtet in dem Filterhalter, nach einem oder mehreren der Ansprüche 10 bis 13, wobei der Sicherheitsdeckel (12a, 12b, 12c) eine zweite zylindrische Wand (16a, 16b, 16c) aufweist, die geschlossen ist und die Schulter (13) umgibt, um einen zylindrischen Ring zu bilden.

15. Einsatz, eingerichtet in dem Filterhalter, nach einem oder mehreren der vorhergehenden Anspruche, wobei die Basis (8a, 8b, 8c) der Schale mehrere Rippen (10) hat, die so eingerichtet sind, dass sie einen dicht gepackten Satz von Kanälen, die sich gegenseitig schneiden, bilden.

16. Einsatz, eingerichtet in dem Filterhalter, nach einem oder mehreren der vorhergehenden Ansprüche, wobei die Schale zu einer vorverpackten Portionskapsel (3c) des Typs E.S.E.® komplementär geformt ist.

## Revendications

1. Insert (1a, 1b, 1c) agencé dans un porte-filtre (6) de machine à café, en particulier de machine à café expresso, ledit insert comprenant un plateau (2a, 2b, 2c) destiné à contenir une dose (3) de café moulu en vrac ou une dosette préemballée (3c) de café moulu, ladite dose ou ladite dosette devant être introduite par un utilisateur par le dessus, ledit plateau comprenant une base (8a, 8b, 8c) qui présente un orifice d'évacuation (9a, 9b, 9c) et une paroi latérale qui définit, avec la base, le plateau, ledit plateau comprenant en outre une saillie (4a, 4b, 4c) située sur la paroi latérale qui fait saillie sensiblement de manière radiale vers l'extérieur du plateau, ledit porte-filtre comprenant une partie en forme de bol et une poignée qui fait saillie à partir de la partie en forme de bol, ledit plateau pouvant être jeté et l'insert comprenant en outre un adaptateur (20a, 20b) doté de moyens destinés à le fixer à un fond de la partie de bol du porte-filtre, de telle sorte que l'adaptateur soit fixé audit fond de ladite partie de bol du porte-filtre, ledit plateau reposant sur ledit adaptateur, caractérisé en ce ladite saillie repose contre la collerette (5) de la partie de bol du porte-filtre.

2. Insert agencé dans le porte-filtre selon la revendication 1, dans lequel la saillie de la paroi latérale du plateau est une collerette supérieure (4a, 4b) du plateau.

3. Insert agencé dans le porte-filtre selon la revendication 2, dans lequel la collerette supérieure (4a, 4b) du plateau est façonnée de manière à présenter un profil en forme de crochet.

4. Insert agencé dans le porte-filtre selon la revendication 2, dans lequel la saillie de la paroi latérale du plateau est une bride (4c) disposée sur la collerette supérieure du plateau.

5. Insert agencé dans le porte-filtre selon l'une ou plusieurs des revendications précédentes, comprenant un dispositif de génération de crème qui est fixé sur la base du plateau au niveau de l'orifice d'évacuation (9a, 9b, 9c).

6. Insert agencé dans le porte-filtre selon la revendication 5, dans lequel ledit dispositif de génération de crème fait saillie à partir de la base du plateau et comprend une cloison élastique (11a, 11b, 11c) et un couvercle de sécurité correspondant (12a, 12b, 12c).

7. Insert agencé dans le porte-filtre selon la revendication 6, dans lequel la cloison élastique (11a, 11b, 11c) est agencée sur une collerette de l'orifice d'évacuation (9a, 9b, 9c) pour le fermer, et comprend une membrane dans laquelle se trouve un trou traversant pouvant se déformer ou un trou borgne pouvant se rompre sous une pression.

8. Insert agencé dans le porte-filtre selon la revendication 7, dans lequel la membrane est réalisée dans un élastomère thermoplastique, de préférence de type SEBS.

9. Insert agencé dans le porte-filtre selon l'une ou plusieurs des revendications 6 à 8, dans lequel la cloison élastique (11c) est co-moulée sur un support annulaire rigide (11d).

10. Insert agencé dans le porte-filtre selon l'une ou plusieurs des revendications 6 à 9, dans lequel le couvercle de sécurité (12a, 12b, 12c) est fixé sur la surface extérieure de la base (8a, 8b, 8c) du plateau et comprend un épaulement intérieur (13) qui est mis en prise avec la cloison élastique (11a, 11b, 11c) pour retenir la cloison contre l'orifice d'évacuation (9a, 9b, 9c) prévu dans la base.

11. Insert agencé dans le porte-filtre selon l'une ou plusieurs des revendications 9 et 10, dans lequel l'épaulement (13) vient en prise avec le support annulaire rigide (11d) de la cloison élastique.

12. Insert agencé dans le porte-filtre selon la revendication 10 ou 11, dans lequel l'épaulement (13) présente au moins un passage (14) et le couvercle de sécurité (12a, 12b, 12c) comprend au moins une ouverture d'évacuation (15) qui est disposée de manière latérale par rapport à l'axe central de l'orifice d'évacuation (9a, 9b, 9c).

13. Insert agencé dans le porte-filtre selon la revendication 12, dans lequel le passage (14) prévu sur l'épaulement (13) et l'ouverture d'évacuation (15) du couvercle de sécurité (12a, 12b, 12c) sont disposés sur des côtés opposés par rapport à l'axe central de l'orifice d'évacuation (9a, 9b, 9c).

14. Insert agencé dans le porte-filtre selon l'une ou plusieurs des revendications 10 à 13, dans lequel le couvercle de sécurité (12a, 12b, 12c) comprend une seconde paroi cylindrique (16a, 16b, 16c) qui est fermée, et entoure l'épaulement (13) de façon à définir un anneau cylindrique.

15. Insert agencé dans le porte-filtre selon l'une ou plusieurs des revendications précédentes, dans lequel la base (8a, 8b, 8c) du plateau présente une pluralité de nervures (10) agencées pour définir un ensemble dense de canaux qui se croisent mutuellement.

16. Insert agencé dans le porte-filtre selon l'une ou plusieurs des revendications précédentes, dans lequel le plateau présente une forme complémentaire de celle d'une dosette préemballée (3c) du type E.S.E. ®.
